# FASCICULE DE BREVET EUROPEEN

(11) **EP 4 433 327 B1**
(45) Date de publication et mention de la délivrance du brevet: **08.04.2026**
(21) Numéro de dépôt: 22817662.4
(22) Date de dépôt: 14.11.2022
(51) Int. Cl.: B60Q 1/00, F21S 41/148, F21S 41/255, F21S 41/26, F21S 41/32, F21S 43/237, F21S 43/245, F21S 43/249, F21S 43/14, F21S 43/20

(54) **MODULE LUMINEUX AVEC FONCTIONS D'ÉCLAIRAGE ET DE SIGNALISATION**
LEUCHTMODUL MIT BELEUCHTUNGS- UND SIGNALFUNKTIONEN
LIGHT MODULE WITH LIGHTING AND SIGNALLING FUNCTIONS

(30) Priorité: 17.11.2021 FR 2112161
(43) Date de publication de la demande: 25.09.2024
(73) Titulaire: Valeo Vision, 93012 Bobigny Cedex (FR)
(72) Inventeur: GIRAUD, Sylvain, 49000 Angers (FR); HERMITTE, Michel, 49000 Angers (FR); CHIRON, Jerome, 49000 Angers (FR)
(74) Mandataire: Valeo Visibility
(86) Numéro de dépôt international: PCT/EP2022/081731
(87) Numéro de publication internationale: WO 2023/088826

(56) Documents cités:
- EP-A1- 1 610 157
- WO-A1-2017/052478
- JP-A- 2016 119 283
- US-A1- 2012 069 592
- US-A1- 2014 056 016
- US-A1- 2021 300 235

## Description

La présente invention se rapporte au domaine de l'éclairage et de la signalisation lumineuse, notamment pour véhicule automobile. Plus précisément, l'invention concerne l'intégration de modules lumineux d'éclairage et de signalisation dans un véhicule automobile.

Les systèmes d'éclairage de véhicule automobile sont généralement aptes à réaliser plusieurs fonctions lumineuses, comprenant à la fois des fonctions d'éclairage, mais également des fonctions de signalisation.

A cet effet, des modules distincts peuvent être dédiées à des fonctions lumineuses respectives. La démultiplication des fonctions lumineuses d'éclairage et de signalisation sur les véhicules automobiles induit alors une augmentation du nombre de modules lumineux. L'encombrement associé à la réalisation de ces fonctions est important.

Il est possible de réaliser plusieurs fonctions d'éclairage dans un même module lumineux, notamment les fonctions « low beam », LB, ou feu de croisement, et les fonctions « high beam », HB, ou feu de route. Toutefois, de tels modules ne prévoient pas d'intégrer des fonctionnalités de signalisation. Qui plus est, les sources lumineuses dédiées à l'éclairage et celles dédiées à la signalisation ont généralement des technologies et/ou des puissances bien différentes, ce qui rend difficile une mutualisation de telles fonctions.

En particulier, certaines fonctions de signalisation peuvent être réalisées au moyen d'un guide de lumière. Un exemple d'une telle réalisation est présenté dans le brevet EP 1 775 511 B. Une source de lumière injecte un faisceau lumineux dans un guide de lumière qui le projette en continue selon la direction longitudinale du guide de lumière. De tels guides de lumières permettent la réalisation de fonctions de signalisation complexes, avec une unique source de lumière. La divulgation du document US 2014/056016 A1 est également pertinente pour la compréhension de l'invention.

Toutefois, il demeure difficile de réduire l'encombrement dans un dispositif lumineux pour véhicule automobile, notamment lorsque des fonctions lumineuses d'éclairage et de signalisation, utilisant des sources lumineuses distinctes, sont requises.

Il est ainsi souhaitable de proposer un module lumineux compact et économique permettant de réaliser à la fois des fonctions d'éclairage et de signalisation.

La présente invention vient améliorer la situation.

A cet effet un premier aspect de l'invention concerne un module lumineux de véhicule automobile selon la revendication 1.

La mutualisation de composant entre les fonctions d'éclairage et de signalisation permet avantageusement de réduire le nombre total de composants du module lumineux, et induit ainsi une réduction de l'encombrement et des coûts associés au module lumineux.

Selon un mode de réalisation, le réflecteur peut comprendre une première surface réfléchissante apte à réfléchir le premier faisceau lumineux et le système optique peut comprendre une lentille de projection configurée pour former une image de la première surface réfléchissante lors de la projection du premier faisceau lumineux en dehors du module lumineux.

Un tel mode de réalisation permet de réduire l'épaisseur du premier faisceau lumineux, et permet ainsi de diminuer la taille du système optique, améliorant ainsi davantage la compacité du module lumineux.

Selon un mode de réalisation, le guide de lumière peut comprendre une face de sortie orientée vers l'extérieur du module et une face de réflexion apte à réfléchir une partie du deuxième faisceau lumineux vers la face de sortie, le composant en commun peut comprendre une surface diffusante ou réfléchissante agencée en regard de la face de réflexion du guide de lumière.

Ainsi, le composant en commun contribue à la fonction d'éclairage d'une part, et améliore le rendement lumineux associé à la fonction de signalisation d'autre part.

Selon un mode de réalisation, le composant en commun peut comprendre une cavité conformée pour recevoir le guide de lumière.

Ainsi, le composant en commun contribue à la fonction d'éclairage d'une part, et facilite le montage des composants associés à la fonction de signalisation d'autre part.

En complément ou en variante, la surface diffusante ou réfléchissante peut être dans la cavité.

Ainsi, le composant en commun contribue à la fonction d'éclairage d'une part, facilite le montage des composants associés à la fonction de signalisation et améliore le rendement lumineux de cette fonction, d'autre part.

Grâce à l'invention, est rendu possible de réaliser des fonctions de signalisation complexes tout en réduisant l'encombrement associé au module lumineux.

Les composants en commun sont des composants très requis pour remplir la fonction d'éclairage, et ce mode de réalisation limite ainsi le nombre de composants du module lumineux.

L'invention tire partie du fait que le réflecteur comprend plusieurs surfaces, dont la surface interne qui est généralement utilisée pour la fonction d'éclairage. Une surface externe peut ainsi être utilisée pour améliorer le rendement lumineux de la fonction de signalisation.

En outre, le support de la première source de lumière qui est mis en commun remplit une fonction de support dans la fonction d'éclairage et améliore en même temps le rendement lumineux de la fonction de signalisation. Le support peut comprendre un radiateur, auquel cas il permet en outre de refroidir la première source de lumière.

En variante ou en complément, les deux guides de lumière peuvent être agencés de part et d'autre du système optique du premier ensemble.

La compacité du module lumineux est ainsi améliorée.

Selon un mode de réalisation, le réflecteur et/ou le support de la première source de lumière est configuré pour permettre à une partie du deuxième faisceau lumineux d'atteindre le premier ensemble de sorte à ce qu'il éclaire le système optique.

Par exemple, la deuxième source de lumière et le guide de lumière sont agencés de manière à ce que ladite partie du deuxième faisceau lumineux puisse atteindre le premier ensemble directement, ou en passant par le deuxième guide de lumière.

Le réflecteur et/ou le support peuvent comporter au moins un trou traversant pour permettre au deuxième faisceau lumineux d'atteindre le premier ensemble.

Selon un mode de réalisation, le deuxième ensemble peut comprendre en outre au moins un écran diffusant apte à diffuser au moins une partie du faisceau lumineux guidé par le guide de lumière vers l'extérieur du module lumineux.

Un tel écran diffusant améliore l'homogénéité du faisceau de signalisation issu du premier ensemble.

D'autres caractéristiques et avantages de l'invention apparaîtront à l'examen de la description détaillée ci-après, et des dessins annexés sur lesquels :
[Fig 1] illustre un ensemble de composants configuré pour réaliser une fonction de signalisation selon l'invention;
[Fig 2] représente une vue en coupe d'un module lumineux selon un premier mode de réalisation de l'invention ;
[Fig 3] représente une vue en coupe d'un module lumineux selon un deuxième mode de réalisation de l'invention ;
[Fig 4] est une vue tridimensionnelle du module lumineux selon le deuxième mode de réalisation de l'invention.

La description se concentre sur les caractéristiques qui démarquent le procédé ou le système de ceux connus dans l'état de l'art. Le fonctionnement et la fabrication de diodes électroluminescentes ne sera pas décrit en détails puisqu'il est en soi connu dans l'état de l'art.

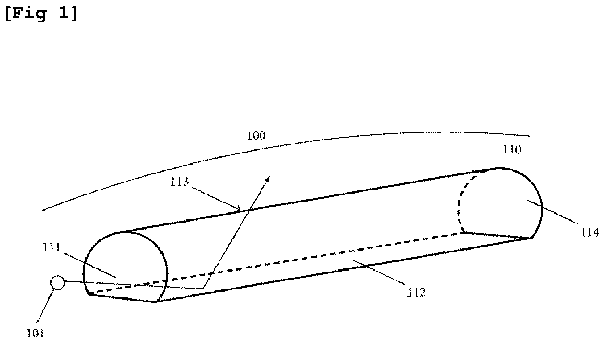

La figure 1 présente des composants d'un ensemble 100 configuré pour réaliser une fonction de signalisation selon un mode de réalisation de l'invention.

L'ensemble 100 comprend un guide optique 110, ou guide de lumière, apte à propager, ou guider, un faisceau lumineux émis par une source lumineuse 101. Dans l'exemple de la figure 1, le guide optique 110 est rectiligne. Il est bien entendu que le guide optique 110 peut avoir d'autres formes, et peut notamment comporter des courbures telles qu'une ou plusieurs portions d'arc de cercle.

Dans le mode de réalisation représenté, le guide optique 110 a une section circulaire. Toutefois, l'invention couvre également le cas où le guide optique 110 a une section elliptique, ovale, carrée voire toute autre forme géométrique ou non.

Aucune restriction n'est attachée au matériau utilisé pour le guide de lumière 110. Par exemple, il peut s'agir d'un polymère transparent, en polycarbonate, ou polymétacrylate de méthyle PMMA).

Le guide de lumière 110 comprend une face d'entrée 111, en regard de laquelle est disposée la source lumineuse 101. Aucune restriction n'est attachée à la technologie utilisée pour la source lumineuse, qui peut par exemple être une diode électroluminescente LED. Le guide de lumière 110 peut également comprendre une face terminale 114, qui constitue l'extrémité opposée à la face d'entrée 111, et qui peut être dépourvue de source lumineuse.

Optionnellement, il est possible de prévoir une source de lumière à chacune des extrémités du guide de lumière 110.

Le guide de lumière 110 comporte en outre deux faces principales orientées longitudinalement :
- une face de sortie 113 d'une partie du faisceau lumineux guidé par le guide de lumière 110. La face de sortie 113 peut être lisse et continue, ou peut comporter des stries. La face de sortie 113 est apte à être dirigée vers l'extérieur d'un module lumineux dans lequel le guide de lumière 110 serait monté ;
- une face de réflexion 112, qui est réfléchissante ou diffusante, et qui peut diriger une partie du faisceau lumineux issu de la source 101 vers la face de sortie 113. La face de réflexion peut comprendre des éléments réfléchissants tels que des prismes. Les prismes peuvent être placés côte à côte et assurent une réflexion des rayons lumineux ayant un angle d'incidence non nul avec un axe optique longitudinal du guide optique. Aucune restriction n'est attachée à la forme de tels prismes, qui ne sont pas représentés sur la figure 1. Les formes et tailles des différents prismes de la face de réflexion 112 peuvent d'ailleurs varier. Selon une autre variante, les éléments réfléchissants de la face de réflexion 112 peuvent être des picots réfléchissants, tels que des creux répartis régulièrement à l'intérieur de la face de réflexion 112, notamment lors du moulage de la pièce constituant le guide de lumière 110. Des exemples d'éléments réfléchissants sont donnés dans la demande de brevet de numéro de publication EP 1 605 201, et dans le brevet européen EP 1 434 000.

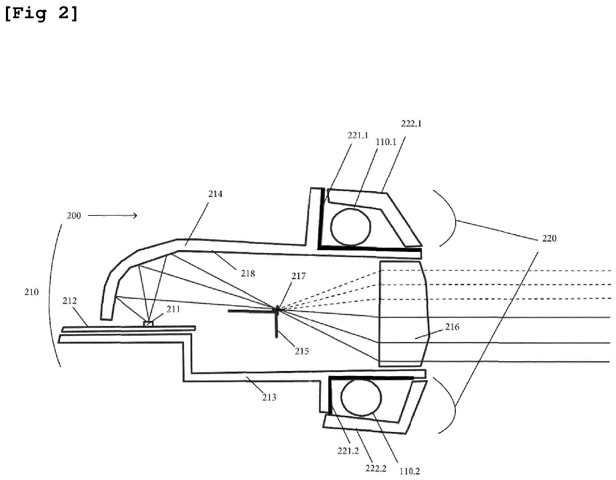

La figure 2 présente une vue en coupe d'un module lumineux 200 selon un premier mode de réalisation de l'invention.

La vue en coupe est une vue dans un plan X-Z, X correspondant sensiblement à un axe de propagation des rayons lumineux issus du module lumineux, ou axe optique, et Z une direction sensiblement verticale.

Le module lumineux 200 comprend un premier ensemble 210 apte à réaliser une fonction d'éclairage et un deuxième ensemble 220 apte à réaliser une fonction de signalisation. Aucune restriction n'est attachée à ces fonctions. Les fonctions d'éclairage peuvent notamment être des fonctions de feu de croisement LB, ou de feu de route HB. Les fonctions de signalisation peuvent quant à elles comprendre une fonction une fonction feu de position, appelée position lamp en anglais, ou encore une fonction clignotant, ou TI pour Turn Indicator en anglais, ou une fonction de feu de jour ou DRL pour Daytime Running Light en anglais.

Le premier ensemble 210 comprend une pluralité de premiers composants, tels que par exemple :
- une première source de lumière 211 apte à générer un premier faisceau lumineux dont certains rayons lumineux sont représentés sur la figure 2. La première source de lumière 211 peut émettre des rayons lumineux du premier faisceau lumineux dans un demi-espace délimité par le plan principal de la source 211, et dans une direction principale perpendiculaire au plan de la source 211. La direction principale d'émission peut par exemple être comprise entre - 40° et +40° par rapport à un axe optique du système optique 216 décrit ci-après. Aucune restriction n'est attachée à la technologie associée à la première source de lumière 211, qui peut notamment être une source de type LED, qui présente l'avantage d'être peu encombrante et peu consommatrice en énergie avec un bon rendement lumineux. La première source de lumière 211 peut être placée sur un circuit imprimé 212, ou PCB pour « Printed Circuit Board » en anglais. Dans ce cas, le circuit imprimé 212 fait partie des premiers composants ;
- un radiateur 213 apte à dissiper une partie de la chaleur générée par la première source de lumière 211, notamment, la première source de lumière 211 est positionnée sur le radiateur 213 directement ou par l'intermédiaire du circuit imprimé 212 ;
- un réflecteur 214 comprenant une première surface réfléchissante 218. La première surface réfléchissante 218 peut notamment être de révolution, avec un profil elliptique, en forme de calotte dans un demi-espace délimité par un plan horizontal X-Y. La source de lumière 211 est positionnée à proximité d'un premier foyer optique de la première surface 218. Un tel positionnement à proximité implique que la source de lumière est au plus à quelques millimètres du premier foyer de la première surface 218, notamment au plus à un millimètre du premier foyer de la première surface 218. Les rayons lumineux issus de première source de lumière 211 sont ainsi réfléchis de manière convergente vers un deuxième foyer de la première surface 218 ;

- une surface réfléchissante dite plieuse 215, qui peut être plane avec un bord de coupure situé à proximité du deuxième foyer de la première surface 218. La plieuse 215 assure une réflexion vers le haut des rayons qui ne passent pas précisément par le deuxième foyer de la première surface 218 ;
- un système optique 216 apte à projeter les rayons lumineux réfléchis par la plieuse 215 ou par le réflecteur 214 à l'extérieur du module lumineux 200. Le système optique 216 peut notamment comprendre une lentille de projection, telle qu'une lentille épaisse, positionnée de manière à ce qu'un foyer 217 de la lentille de projection soit situé à proximité du bord de la plieuse 215, soit à proximité du deuxième foyer du réflecteur 214. Le système optique 216 peut comprendre d'autres éléments optiques que la lentille de projection, tel qu'un ou plusieurs miroirs notamment.

La plieuse 215 est nommée ainsi en ce qu'elle replie vers le haut de la lentille de projection les rayons qui, sinon, formeraient une partie supérieure du faisceau d'éclairage.

Le premier ensemble selon le premier mode de réalisation peut comprendre en outre d'autres premiers composants permettant la réalisation de la fonction d'éclairage, qui ne sont pas représentés sur la figure 2.

Le module lumineux selon l'invention comprend en outre un deuxième ensemble 220 apte à réaliser une fonction de signalisation. Le deuxième ensemble 220 comprend une pluralité de deuxièmes composants, tels que notamment :
- au moins une deuxième source de lumière, telle que la source de lumière 101 décrite en référence à la figure 1. La deuxième source de lumière est apte à émettre un deuxième faisceau lumineux ;
- au moins un guide de lumière 110 apte à guider le deuxième faisceau lumineux issu de la deuxième source de lumière.

Deux guides de lumière 110.1 et 110.2 ont été illustrés sur la figure 2, à titre illustratif uniquement. L'invention couvre également le cas où un unique guide de lumière 110.1 ou 110.2 est prévu pour réaliser la fonction de signalisation. Chacun des guides de lumière 110.1 et 110.2 est alors associé à une deuxième source de lumière respective.

De manière optionnelle, le deuxième ensemble 220 peut en outre comprendre un écran diffusant 222.1 ou 222.2 situé en regard de la face de sortie 113 du guide de lumière 110.1 ou 110.2, et apte à diffuser un faisceau de signalisation vers l'extérieur du module 200. Aucune restriction n'est attachée à l'écran diffusant 222.1 ou 222.2 qui peut être en matière plastique, avec un motif pour diffuser la lumière, un grainage, ou dans un matériau opalescent.

Selon l'invention, le premier ensemble 210 et le deuxième ensemble 220 ont au moins un composant en commun. Autrement dit, la pluralité de premiers composants et la pluralité de deuxièmes composants ont au moins un composant en commun. L'invention permet ainsi une mutualisation des composants entre la fonction d'éclairage et la fonction de signalisation, ce qui permet avantageusement de réduire l'encombrement associé au module lumineux 220 ainsi que son coût.

Par exemple, le ou les composants en commun peut comprendre :
- le réflecteur 214 uniquement. Le réflecteur 214 peut être conformé de manière à accueillir et à faciliter l'insertion et/ou la fixation du guide de lumière 110.1 dans le module lumineux 200. A cet effet, le réflecteur 214 peut comprendre une cavité dans laquelle peut se loger le guide de lumière 110.1, comme représenté sur la figure 2. La cavité peut présenter deux segments formant un angle comme sur la figure 2, peut être arrondie ou peut avoir toute autre forme facilitant l'insertion/fixation du guide de lumière 110.1. De manière complémentaire ou en variante, le réflecteur 214 peut comprendre une deuxième surface réfléchissante 221.1. Le réflecteur 214 permet ainsi, en plus de sa contribution à la fonction d'éclairage dans le premier ensemble 210, de remplir une fonction mécanique et/ou optique dans le deuxième ensemble 220, contribuant ainsi également à la fonction de signalisation du module lumineux 200 ;
- un support de la première source 211 uniquement, le support comprenant le circuit imprimé 212 et/ou radiateur 213. Comme illustré sur la figure 2, le radiateur 213 peut être conformé de manière à accueillir et à faciliter l'insertion et/ou la fixation du guide de lumière 110.2 dans le module lumineux 200. A cet effet, le radiateur 213 peut comprendre une cavité dans laquelle peut se loger le guide de lumière 110.2, comme représenté sur la figure 2. La cavité peut présenter deux segments formant un angle comme sur la figure 2, peut être arrondie ou peut avoir toute autre forme facilitant l'insertion/fixation du guide de lumière 110.2. De manière complémentaire ou en variante, le radiateur 213 peut comprendre une troisième surface réfléchissante 221.2. Le radiateur 213 permet ainsi, en plus de sa contribution à la fonction d'éclairage dans le premier ensemble 210, de remplir une fonction mécanique et/ou optique dans le deuxième ensemble 220, contribuant ainsi également à la fonction de signalisation du module lumineux 200 ;
- le réflecteur 214 et le support de la première source lumineuse 211. Il s'agit du mode de réalisation illustré sur la figure 2, dans lequel deux composants sont en commun entre le premier ensemble 210 et le deuxième ensemble 220.

On comprendra que l'invention s'applique à d'autres composants communs, ainsi qu'à un nombre supérieur à 2 composants communs.

L'invention permet ainsi, par la mutualisation de composants entre une fonction d'éclairage et une fonction de signalisation, de réduire le nombre total de composants, et donc de réduire l'encombrement du module lumineux 200 ainsi que son coût.

Par ailleurs, il est possible de prévoir des fuites de lumière entre le premier ensemble 210 et le deuxième ensemble 220. En particulier, il peut être avantageux qu'une partie du deuxième faisceau lumineux, et en particulier, que de la lumière émise les deuxièmes sources de lumière et transmise par les guides de lumière 110.1, 110.2, puisse parvenir dans le premier ensemble 210, et puisse éclairer le système optique 216. Dans ce cas, lorsque le deuxième ensemble 220 réalise la fonction de signalisation, l'écran diffusant 222.1, 222.2 est éclairé, ainsi que le système optique 216. Le système optique 216 se retrouve donc éclairé indépendamment de l'activation de la fonction d'éclairage émise par le premier ensemble 210.

Afin de permettre les fuites de lumière depuis le deuxième ensemble 220 vers le premier ensemble 210, des trous traversant peuvent être prévus dans le réflecteur 214 et/ou dans le radiateur 213 à proximité des guides de lumière 110.1, 110.2.

Cette disposition est particulièrement avantageuse lorsque la fonction de signalisation réalisée par le deuxième ensemble 220 est activée de jour, notamment pour réaliser la fonction de feu de jour, et de nuit, notamment pour réaliser la fonction de feu de position. En effet, on obtient ainsi une signature lumineuse du module lumineux 200 qui est identique de jour, lorsque seule la fonction de signalisation est activée, et de nuit, lorsque les fonctions d'éclairage et de signalisation sont activées.

Comme illustré sur la figure 2, dans le cas où le deuxième ensemble 220 comprend deux guides de lumière 110.1 et 110.2, les guides de lumière peuvent être agencés de part et d'autre du système optique 216. Ainsi, la compacité du module lumineux 200 est améliorée.

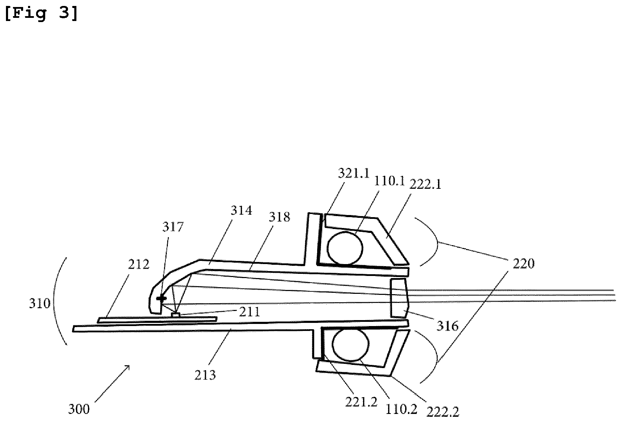

La figure 3 illustre une vue en coupe d'un module lumineux 300 selon un deuxième mode de réalisation de l'invention.

Le plan de coupe de la figure 3 est identique à celui de la figure 2. Les éléments identiques entre les figures 2 et 3 sont repérés par les mêmes références numériques.

Le premier ensemble 310 selon le deuxième mode de réalisation peut comprendre :
- un réflecteur 314 décrit ci-après,
- un système optique 316 décrit ci-après ;
- la première source lumineuse 211, le circuit imprimé 212 et le radiateur 213 tels que décrits précédemment.

Le réflecteur 314 selon le deuxième mode de réalisation peut être en forme de coque ou calotte, comprenant une première surface réfléchissante 318 sur la face intérieure du réflecteur 314. La première surface réfléchissante 318 présente avantageusement un profil du type elliptique ou parabolique. Elle est avantageusement une surface de révolution autour d'un axe parallèle à l'axe optique. Alternativement, il peut s'agir d'une surface de forme libre (en anglais « free form ») ou une surface balayée ou une surface asymétrique. Elle peut aussi comporter plusieurs secteurs. L'expression « type parabolique » s'applique de manière générale à des réflecteurs dont la première surface réfléchissante présente un seul foyer, c'est-à-dire une zone de convergence des rayons lumineux telle que les rayons lumineux émis par la première source de lumière 211 placée au niveau de cette zone de convergence sont projetés à grande distance après réflexion sur la première surface réfléchissante 218. Projeté à grande distance signifie que ces rayons lumineux ne convergent pas vers une zone située à au moins 10 fois les dimensions du réflecteur 314. Autrement dit les rayons réfléchis ne convergent pas vers une zone de convergence ou, s'ils convergent, cette zone de convergence est située à une distance supérieure ou égale à 10 fois les dimensions du réflecteur 314. Une première surface 318 de type parabolique peut donc présenter ou non des portions paraboliques. Le réflecteur 314 présentant une telle première surface 318 est généralement utilisé seul pour créer le premier faisceau lumineux.

Ainsi, le premier ensemble 310 n'intègre pas de plieuse 215 comme dans le premier mode de réalisation.

La première source lumineuse 211 est disposée à un foyer de la première surface 318 de manière à ce que les rayons lumineux du premier faisceau lumineux soient collectés et réfléchis suivant l'axe optique. Au moins une partie de ces rayons réfléchis présentent des angles d'inclinaison dans un plan vertical par rapport à l'axe optique qui sont inférieurs ou égaux à 25°, de préférence inférieurs ou égaux à 10°, de manière à être dans des conditions dites de Gauss, permettant d'obtenir un stigmatisme, c'est à dire une netteté de l'image projetée par le système optique 316. Il s'agit avantageusement des rayons réfléchis par une partie arrière, à gauche sur la figure 3, de la première surface 318.

Le système optique 316 selon le deuxième mode de réalisation peut comprendre une lentille de projection, telle qu'une lentille plan-convexe, c'est à dire avec une face d'entrée plane et une face de sortie convexe. Dans cet exemple, la focale de la lentille 316 est grande, par exemple supérieure à 60 mm. De plus, la hauteur de la lentille 316 est faible, par exemple inférieure à 30 mm, voire inférieure à 15 mm. Ceci est facilité par la faible inclinaison des rayons à dévier. Ainsi, la lentille 316 est dite mince, par exemple son épaisseur est inférieure à 6mm. La lentille 316 présente un foyer 317 qui est situé le long de l'axe optique, au niveau de la première source 211 ou encore en arrière de la première source 211. En l'occurrence, le foyer 317 est situé au niveau de la première surface 318. Il est à noter qu'il est possible que le foyer 317 soit situé à l'arrière ou à l'avant de la première surface 318, pour autant que ce soit à proximité de cette première surface 318, de préférence à moins de 10mm, préférentiellement moins de 5mm. Ainsi, le système optique 316 est apte à former une image de la première surface réfléchissante 318.

La première surface 318, si elle est du type elliptique, présente un deuxième foyer situé à l'avant de la lentille 316 et à proximité de l'axe optique. Il est à noter qu'il est aussi possible que ce foyer soit situé à l'arrière de la lentille 316, pour autant que ce soit à proximité de la lentille 316, de manière à réduire la largeur du faisceau au niveau de la face d'entrée de la lentille 316.

Le deuxième mode de réalisation présente ainsi l'avantage d'une plus grande compacité comparativement au premier mode de réalisation, notamment selon la direction verticale. En effet, du fait de la faible épaisseur du premier faisceau lumineux qui atteint la lentille 316, il est possible de réduire sa taille verticale. Elle peut ainsi être comprise entre 5 et 30mm, de préférence inférieure à 15mm.

Le deuxième ensemble 220 peut être identique à celui décrit en référence à la figure 2, et peut comprendre au moins une deuxième source de lumière 101 et au moins un guide de lumière 110. Dans l'exemple de la figure 3, le deuxième ensemble 220 comprend deux deuxièmes sources de lumière 101, deux guides de lumière 110.1 et 110.2, ainsi que deux écrans diffusants 222.1 et 222.2.

Afin d'améliorer davantage la compacité du module lumineux 300, le premier ensemble 310 et le deuxième ensemble 220 comprennent au moins un composant en commun.

Par exemple, les composants en commun peuvent comprendre :
- le réflecteur 314 uniquement. Le réflecteur 314 peut être conformé de manière à accueillir et à faciliter l'insertion et/ou la fixation du guide de lumière 110.1 dans le module lumineux 300.

A cet effet, le réflecteur 314 peut comprendre une cavité dans laquelle peut se loger le guide de lumière 110.1, comme représenté sur la figure 3. La cavité peut présenter deux segments formant un angle comme sur la figure 3, peut être arrondie ou peut avoir toute autre forme facilitant l'insertion/fixation du guide de lumière 110.1. De manière complémentaire ou en variante, le réflecteur 314 peut comprendre une deuxième surface réfléchissante 321.1. Le réflecteur 314 permet ainsi, en plus de sa contribution à la fonction d'éclairage dans le premier ensemble 310, de remplir une fonction mécanique et/ou optique dans le deuxième ensemble 220, contribuant ainsi également à la fonction de signalisation du module lumineux 300 ;
- le support de la première source 211 uniquement, le support comprenant le circuit imprimé 212 et/ou radiateur 213, et qui demeure inchangé par rapport au premier mode de réalisation;
- le réflecteur 314 et le support de la première source 211. Il s'agit du mode de réalisation illustré sur la figure 3, dans lequel deux composants sont en commun entre le premier ensemble 310 et le deuxième ensemble 220.

Comme pour le premier mode de réalisation, des fuites de lumière peuvent être prévues entre le premier ensemble 310 et le deuxième ensemble 220. En particulier, le réflecteur 314 et/ou le radiateur 213 peuvent être agencés pour qu'une partie du deuxième faisceau lumineux, et en particulier, la lumière émise par les deuxièmes sources de lumière et transmise par les guides de lumière 110.1, 110.2 puisse parvenir dans le premier ensemble 210, et puisse sortir du module lumineux 300 par le système optique 316.

Les collecteurs 214 et 314 selon l'invention peuvent avantageusement être réalisés dans des matériaux présentant une bonne tenue à la chaleur, par exemple du verre ou des polymères synthétiques comme du polycarbonate PC ou du polyétherimide PEI.

Les deuxièmes surfaces réfléchissantes 221.1, 221.2 et 321.1 peuvent être formées par un miroir, une surface grainée et/ou avec des motifs, ou un revêtement blanc.

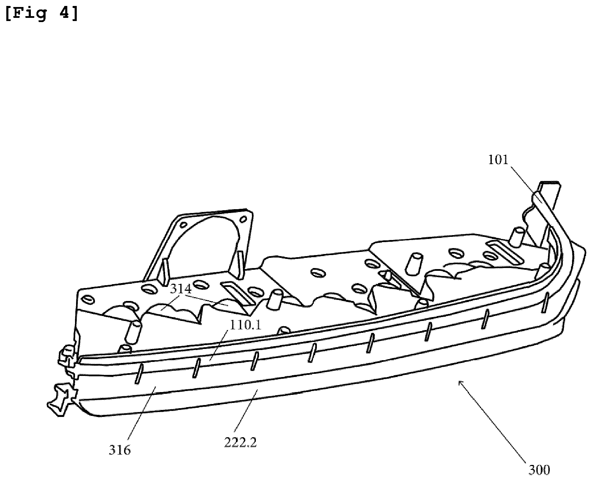

La figure 4 illustre une vue tridimensionnelle d'un module lumineux 300 selon le deuxième mode de réalisation de l'invention.

La vue représentée est située face au module lumineux, depuis l'extérieur, en plongée. Le module lumineux 300 représenté comprend un écran diffusant 222.2 en regard du deuxième guide de lumière 110.2 qui est caché par l'écran diffusant 222.2. L'écran diffusant 222.1 n'est quant à lui pas représenté afin rendre visible le premier guide de lumière 110.1.

Comme représenté sur la figure 4, le système optique 316 peut être mutualisé entre plusieurs réflecteurs 314 du module lumineux 300. Aucune restriction n'est attachée au nombre de réflecteurs 314 ni à leur agencement dans le module lumineux. Le système optique 316 représenté sur la figure 4 présente une dimension verticale très réduite, et le module lumineux 300 est compacte tout en assurant plusieurs fonctions d'éclairage et de signalisation.

## Revendications

1. Module lumineux (200 ; 300) de véhicule automobile comprenant : ;
- un premier ensemble (210 ; 310) configuré pour réaliser une fonction d'éclairage, et comprenant une pluralité de premiers composants, lesdits premiers composants comprenant au moins :
une première source (211) de lumière apte à émettre un premier faisceau lumineux ;
un support (212 ;213) de la première source de lumière (211) ;
un réflecteur (214 ; 314) apte à réfléchir le premier faisceau lumineux ; et
un système optique (216 ; 316) apte à projeter le premier faisceau lumineux réfléchi en dehors du module lumineux ;
- un deuxième ensemble (220) configuré pour réaliser une fonction de signalisation, et comprenant une pluralité de deuxièmes composants, la pluralité de deuxièmes composants comprenant au moins :
deux deuxièmes sources de lumière (101) aptes à émettre un deuxième faisceau lumineux ;
deux guides de lumière (110.1 ; 110.2), chaque guide de lumière étant associé respectivement à une deuxième source de lumière et configuré pour guider le deuxième faisceau lumineux ;
**caractérisé en ce que** la pluralité de deuxièmes composants et la pluralité de premiers composants ont au moins deux composants en commun, lesdits au moins deux composants en commun étant le réflecteur et le support de la première source de lumière,
et **en ce que** le réflecteur (214 ; 314) comprend une première surface réfléchissante (218 ; 318) apte à réfléchir le premier faisceau lumineux et une deuxième surface réfléchissante (221.1 ;321.1) agencée en regard de l'un des guides de lumière (110.1) du deuxième ensemble, et **en ce que** le support (212 ; 213) de la première source de lumière (211) comprend une troisième surface réfléchissante (221.2) en regard de l'autre guide de lumière (110.2) du deuxième ensemble.

2. Module lumineux selon la revendication 1, dans lequel le réflecteur (314) comprend une première surface réfléchissante (318) apte à réfléchir le premier faisceau lumineux et dans lequel le système optique comprend une lentille de projection (316) configurée pour former une image de la première surface réfléchissante lors de la projection du premier faisceau lumineux en dehors du module lumineux.

3. Module lumineux selon la revendication 1 ou 2, dans lequel le guide de lumière (110.1 ; 110.2) comprend une face de sortie (113) orientée vers l'extérieur du module et une face de réflexion (112) apte à réfléchir une partie du deuxième faisceau lumineux vers la face de sortie, dans lequel le composant en commun comprend une surface diffusante ou réfléchissante (221.1 ; 221.2 ; 321.1) agencée en regard de la face de réflexion du guide de lumière.

4. Module lumineux selon l'une des revendications précédentes, dans lequel le composant en commun comprend une cavité conformée pour recevoir le guide de lumière (110.1 ; 110.2).

5. Module lumineux selon les revendications 3 et 4, dans lequel la surface diffusante ou réfléchissante (221.1 ; 221.2 ; 321.1) est dans ladite cavité.

6. Module lumineux selon l'une des revendications précédentes, dans lequel les deux guides de lumière (110.1 ; 110.2) sont agencés de part et d'autre du système optique (216 ; 316) du premier ensemble.

7. Module lumineux selon l'une des revendications des revendications précédentes, dans lequel le réflecteur (214, 314) et/ou le support (213) de la première source de lumière est configuré pour permettre à une partie du deuxième faisceau lumineux d'atteindre le premier ensemble (210 ; 310) de sorte à ce qu'il éclaire le système optique (216 ; 316).

8. Module lumineux selon l'une des revendications précédentes, dans lequel le deuxième ensemble comprend en outre au moins un écran diffusant (222.1 ; 222.2) apte à diffuser au moins une partie du faisceau lumineux guidé par le guide de lumière (110.1 ; 110.2) vers l'extérieur du module lumineux (200 ; 300).

## Patentansprüche

1. Leuchtmodul (200; 300) für ein Kraftfahrzeug, umfassend:
- eine erste Baugruppe (210; 310), die konfiguriert ist, um eine Beleuchtungsfunktion zu realisieren, und eine Vielzahl von ersten Komponenten umfasst, wobei die ersten Komponenten mindestens umfassen:
eine erste Lichtquelle (211), die geeignet ist, einen ersten Lichtstrahl auszusenden;
einen Träger (212; 213) der ersten Lichtquelle (211);
einen Reflektor (214; 314), der geeignet ist, den ersten Lichtstrahl zu reflektieren; und
ein optisches System (216; 316), das geeignet ist, den reflektierten ersten Lichtstrahl außerhalb des Leuchtmoduls zu projizieren;
- eine zweite Baugruppe (220), die konfiguriert ist, um eine Signalisierungsfunktion zu realisieren, und eine Vielzahl von zweiten Komponenten umfasst, wobei die Vielzahl von zweiten Komponenten mindestens umfasst:
zwei zweite Lichtquellen (101), die geeignet sind, einen zweiten Lichtstrahl auszusenden;
zwei Lichtleiter (110.1; 110.2), wobei jeder Lichtleiter jeweils einer zweiten Lichtquelle zugeordnet ist und konfiguriert ist, um den zweiten Lichtstrahl zu leiten;
**dadurch gekennzeichnet, dass** die Vielzahl von zweiten Komponenten und die Vielzahl von ersten Komponenten mindestens zwei gemeinsame Komponenten haben, wobei die mindestens zwei gemeinsamen Komponenten der Reflektor und der Träger der ersten Lichtquelle sind,
und dadurch, dass der Reflektor (214; 314) eine erste reflektierende Oberfläche (218; 318) umfasst, die geeignet ist, den ersten Lichtstrahl zu reflektieren, und eine zweite reflektierende Oberfläche (221.1; 321.1), die gegenüber einem der Lichtleiter (110.1) der zweiten Baugruppe angeordnet ist, und dadurch, dass der Träger (212; 213) der ersten Lichtquelle (211) eine dritte reflektierende Oberfläche (221.2) gegenüber dem anderen Lichtleiter (110.2) der zweiten Baugruppe umfasst.

2. Leuchtmodul nach Anspruch 1, wobei der Reflektor (314) eine erste reflektierende Oberfläche (318) umfasst, die geeignet ist, den ersten Lichtstrahl zu reflektieren, und wobei das optische System eine Projektionslinse (316) umfasst, die konfiguriert ist, um ein Bild der ersten reflektierenden Oberfläche bei der Projektion des ersten Lichtstrahls außerhalb des Leuchtmoduls zu bilden.

3. Leuchtmodul nach Anspruch 1 oder 2, wobei der Lichtleiter (110.1; 110.2) eine nach außen des Moduls gerichtete Austrittsfläche (113) und eine Reflexionsfläche (112) umfasst, die geeignet ist, einen Teil des zweiten Lichtstrahls zur Austrittsfläche zu reflektieren, wobei die gemeinsame Komponente eine streuende oder reflektierende Oberfläche (221.1; 221.2; 321.1) umfasst, die gegenüber der Reflexionsfläche des Lichtleiters angeordnet ist.

4. Leuchtmodul nach einem der vorhergehenden Ansprüche, wobei die gemeinsame Komponente einen Hohlraum umfasst, der geformt ist, um den Lichtleiter (110.1; 110.2) aufzunehmen.

5. Leuchtmodul nach den Ansprüchen 3 und 4, wobei die streuende oder reflektierende Oberfläche (221.1; 221.2; 321.1) in dem Hohlraum ist.

6. Leuchtmodul nach einem der vorhergehenden Ansprüche, wobei die zwei Lichtleiter (110.1; 110.2) beiderseits des optischen Systems (216; 316) der ersten Baugruppe angeordnet sind.

7. Leuchtmodul nach einem der vorhergehenden Ansprüche, wobei der Reflektor (214, 314) und/oder der Träger (213) der ersten Lichtquelle konfiguriert ist, um einem Teil des zweiten Lichtstrahls zu ermöglichen, die erste Baugruppe (210; 310) zu erreichen, sodass er das optische System (216; 316) beleuchtet.

8. Leuchtmodul nach einem der vorhergehenden Ansprüche, wobei die zweite Baugruppe ferner mindestens einen Streuschirm (222.1; 222.2) umfasst, der geeignet ist, mindestens einen Teil des durch den Lichtleiter (110.1; 110.2) geleiteten Lichtstrahls nach außerhalb des Leuchtmoduls (200; 300) zu streuen.

## Claims

1. Light module (200; 300) of a motor vehicle comprising:
- a first assembly (210; 310) configured to perform a lighting function, and comprising a plurality of first components, said first components comprising at least:
a first light source (211) capable of emitting a first light beam;
a support (212; 213) for the first light source (211);
a reflector (214; 314) capable of reflecting the first light beam; and
an optical system (216; 316) capable of projecting the reflected first light beam outside the light module;
- a second assembly (220) configured to perform a signaling function, and comprising a plurality of second components, the plurality of second components comprising at least:
two second light sources (101) capable of emitting a second light beam;
two light guides (110.1; 110.2), each light guide being respectively associated with a second light source and configured to guide the second light beam;
**characterized in that** the plurality of second components and the plurality of first components have at least two components in common, said at least two components in common being the reflector and the support of the first light source,
and **in that** the reflector (214; 314) comprises a first reflective surface (218; 318) capable of reflecting the first light beam and a second reflective surface (221.1; 321.1) arranged facing one of the light guides (110.1) of the second assembly, and **in that** the support (212; 213) of the first light source (211) comprises a third reflective surface (221.2) facing the other light guide (110.2) of the second assembly.

2. Light module according to claim 1, wherein the reflector (314) comprises a first reflective surface (318) capable of reflecting the first light beam and wherein the optical system comprises a projection lens (316) configured to form an image of the first reflective surface when projecting the first light beam outside the light module.

3. Light module according to claim 1 or 2, wherein the light guide (110.1; 110.2) comprises an exit face (113) oriented towards the outside of the module and a reflection face (112) capable of reflecting a portion of the second light beam towards the exit face, wherein the common component comprises a diffusing or reflective surface (221.1; 221.2; 321.1) arranged facing the reflection face of the light guide.

4. Light module according to any one of the preceding claims, wherein the common component comprises a cavity shaped to receive the light guide (110.1; 110.2).

5. Light module according to claims 3 and 4, wherein the diffusing or reflective surface (221.1; 221.2; 321.1) is in said cavity.

6. Light module according to any one of the preceding claims, wherein the two light guides (110.1; 110.2) are arranged on either side of the optical system (216; 316) of the first assembly.

7. Light module according to any one of the preceding claims, wherein the reflector (214, 314) and/or the support (213) of the first light source is configured to allow a portion of the second light beam to reach the first assembly (210; 310) so as to illuminate the optical system (216; 316).

8. Light module according to any one of the preceding claims, wherein the second assembly further comprises at least one diffusing screen (222.1; 222.2) capable of diffusing at least a portion of the light beam guided by the light guide (110.1; 110.2) towards the outside of the light module (200; 300).
